(19) Europäisches Patentamt
European Patent Office
Office européen des brevets

(11) **EP 4 224 547 A1**

(12) **EUROPEAN PATENT APPLICATION**

(43) Date of publication:
09.08.2023 Bulletin 2023/32

(21) Application number: 23152267.3

(22) Date of filing: 18.01.2023

(51) International Patent Classification (IPC):
$H01M\ 4/04$ (2006.01)   $H01M\ 4/134$ (2010.01)
$H01M\ 4/1395$ (2010.01)   $H01M\ 4/62$ (2006.01)
$H01M\ 4/36$ (2006.01)   $H01M\ 4/38$ (2006.01)
$H01M\ 10/052$ (2010.01)   $H01M\ 4/02$ (2006.01)

(52) Cooperative Patent Classification (CPC):
H01M 4/0404; H01M 4/0407; H01M 4/134;
H01M 4/1395; H01M 4/364; H01M 4/386;
H01M 4/62; H01M 4/622; H01M 10/052;
H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.01.2022 KR 20220008082

(71) Applicant: SK On Co., Ltd.
Seoul 03161 (KR)

(72) Inventors:
• JEONG, Kwang Ho
34124 Daejeon (KR)
• KIM, Sung Do
34124 Daejeon (KR)
• JIN, Jae Kyu
34124 Daejeon (KR)

(74) Representative: Stolmár & Partner
Patentanwälte PartG mbB
Blumenstraße 17
80331 München (DE)

(54) **NEGATIVE ELECTRODE, METHOD OF MANUFACTURING NEGATIVE ELECTRODE, AND SECONDARY BATTERY INCLUDING NEGATIVE ELECTRODE**

(57) A method of manufacturing a negative electrode includes styrene butadiene rubber on at least one surface of a negative electrode current collector, applying a second slurry including a negative electrode active material and a polyacrylic acid-based binder onto the first slurry, and drying and rolling the negative electrode current collector to which the first slurry and the second slurry are applied. The negative electrode active material includes a silicon-based negative electrode active material. According to the present disclosure, expansion and contraction of a silicon-based negative electrode active material during charging and discharging may be alleviated, and electrode flexibility may be improved, resulting in a significant improvement in lifespan properties of a secondary battery.

100

FIG. 1

EP 4 224 547 A1

**Description**

**BACKGROUND**

**1. FIELD**

The present disclosure relates to a negative electrode, a method of manufacturing the negative electrode, and a secondary battery including the negative electrode.

**2. DESCRIPTION OF RELATED ART**

A lithium secondary battery, which has recently drawn attention as a power source for portable and small-sized electronic devices, uses an organic electrolyte and has a high energy density, such as a discharge voltage that is two or more times higher than that of a battery using an alkali aqueous solution according to the related art.

With the development of various devices using a secondary battery as a power source, various devices have been miniaturized and implemented with high performance. In order to satisfy the conditions required for such various devices, it is required to reduce the size and weight of a lithium secondary battery and to increase the energy density of the secondary battery for long-term use of high-performance devices. Therefore, many studies have been conducted to increase the capacity of a secondary battery.

In general, graphite is mainly used as a negative electrode active material of a lithium secondary battery, but graphite has a small capacity per unit mass of 372 mAh/g, so that there may be a limit to increasing the capacity of a lithium secondary battery.

Accordingly, in order to increase the energy density of a secondary battery, many studies have been conducted on the use of a negative electrode active material having a capacity higher than that of graphite, and representatively, studies have been conducted in various directions so as to apply silicon as a negative electrode active material.

However, silicon as a negative electrode active material has a large volume expansion due to intercalation/deintercalation of lithium in a charging and discharging process, and thus has poor lifespan properties due to a reduction in adhesive strength and conductivity in the electrode.

**SUMMARY**

An aspect of the present disclosure provides a negative electrode with improved lifespan properties by alleviating expansion and contraction of a silicon-based negative electrode active material during charging and discharging, and providing electrode flexibility, a method of manufacturing the negative electrode, and a secondary battery including the negative electrode.

According to an aspect of the present disclosure, there is provided a method of manufacturing a negative electrode, the method including applying a first slurry including styrene butadiene rubber onto at least one surface of a negative electrode current collector, applying a second slurry including a negative electrode active material and a polyacrylic acid-based binder onto the first slurry, and drying and rolling the negative electrode current collector to which the first slurry and the second slurry are applied. The negative electrode active material may include a silicon-based negative electrode active material.

The polyacrylic acid-based binder may include 40 to 90 mol% of an acrylic acid-derived structural unit, based on the total number of moles of the binder.

The styrene butadiene rubber may include 10 to 95 mol% of a butadiene-derived structural unit, based on the total number of moles of the styrene butadiene rubber.

The polyacrylic acid-based binder may include an acrylic acid-derived structural unit, and at least one selected from the group consisting of a vinyl alcohol-derived structural unit, an acrylamide-derived structural unit, an acrylate-derived structural unit, and a vinyl acetate-derived structural unit.

An amount of a butadiene-derived structural unit present in the styrene butadiene rubber and an amount of an acrylic acid-derived structural unit present in the polyacrylic acid-based binder may satisfy a relational expression of Equation 1 below.

[Equation 1]

$$[\text{Amount of butadiene} - \text{derived structural unit (mol)}]$$

$$\geq \frac{3}{4} \text{X} [\text{Amount of acrylic acid} - \text{derived structural unit (mol)}]$$

The applying of the second slurry may be performed before the first slurry is dried.

According to another aspect of the present disclosure, there is provided a negative electrode including a negative electrode current collector, a primer layer formed on at least one surface of the negative electrode current collector, the primer layer including styrene butadiene rubber, a negative electrode mixture layer formed on the primer layer, the negative electrode mixture layer including a negative electrode active material and a polyacrylic acid-based binder. The negative electrode active material may include a silicon-based negative electrode active material.

The polyacrylic acid-based binder may include 40 to 90 mol% of an acrylic acid-derived structural unit, based on the total number of moles of the binder.

The styrene butadiene rubber may include 10 to 95 mol% of a butadiene-derived structural unit, based on the total number of moles of the styrene butadiene rubber.

The polyacrylic acid-based binder may include an acrylic acid-derived structural unit, and at least one selected from the group consisting of a vinyl alcohol-derived structural unit, an acrylamide-derived structural unit, an acrylate-derived structural unit, and a vinyl acetate-derived structural unit.

An amount of a butadiene-derived structural unit present in the styrene butadiene rubber and an amount of an acrylic acid-derived structural unit present in the polyacrylic acid-based binder may satisfy a relational expression of Equation 1 below.

[Equation 1]

$$\text{[Amount of butadiene} - \text{derived structural unit (mol)]}$$
$$\geq \frac{3}{4} \times \text{[Amount of acrylic acid} - \text{derived structural unit (mol)]}$$

A loading amount of the primer layer may be 0.1 to 2 wt% of the total loading of the negative electrode.

According to another aspect of the present disclosure, there is provided a secondary battery including a positive electrode, the negative electrode of claim 7, and a separator interposed between the positive electrode and the negative electrode.

According to the present disclosure, expansion and contraction of a silicon-based negative electrode active material during charging and discharging may be alleviated, and electrode flexibility may be improved, resulting in a significant improvement in lifespan properties of a secondary battery.

## BRIEF DESCRIPTION OF DRAWINGS

The above and other aspects, features, and advantages of the present disclosure will be more clearly understood from the following detailed description, taken in conjunction with the accompanying drawings, in which:

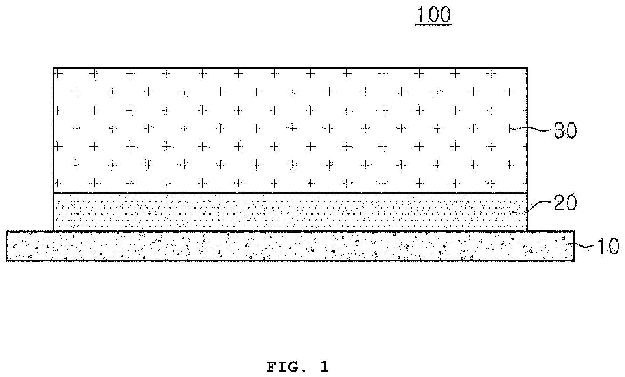

FIG. 1 is a schematic diagram illustrating a negative electrode according to an example embodiment of the present disclosure.

## DETAILED DESCRIPTION

Hereinafter, preferred example embodiments of the present disclosure will be described with reference to various examples. However, the example embodiments of the present disclosure may be modified in various other forms, and the scope of the present disclosure is not limited to the example embodiments described below.

The present disclosure relates to a negative electrode, a method of manufacturing the negative electrode, and a secondary battery including the negative electrode.

According to one aspect of the present disclosure, there is provided a method of manufacturing a negative electrode, the method including applying a first slurry including styrene butadiene rubber onto at least one surface of a negative electrode current collector, applying a second slurry including a negative electrode active material and a polyacrylic acid-based binder onto the first slurry, and drying and rolling the negative electrode current collector to which the first slurry and the second slurry are applied. The negative electrode active material may include a silicon-based negative electrode active material.

First, an operation of applying a first slurry including styrene butadiene rubber onto at least one surface of a negative electrode current collector may be performed. In the present disclosure, the first slurry may form a primer layer on the negative electrode current collector, and the first slurry may include the styrene butadiene rubber. The primer layer including a large amount of styrene butadiene rubber may be formed on a surface of the electrode, as described above, thereby providing flexibility to the electrode. Thus, the lifespan properties of a secondary battery may be improved.

The styrene butadiene rubber may include 10 to 95 mol% or 30 to 90 mol% of a butadiene-derived structural unit, based on the total number of moles of the styrene butadiene rubber. When an amount of the butadiene-derived structural unit is less than 10 mol%, the styrene butadiene rubber itself may have low adhesive strength, whereas when the amount of the butadiene-derived structural unit is greater than 95 mol%, the electrode may have excessively high resistance, and thus the effect of the disclosure may be lowered.

The first slurry may include a solvent, and the solvent is not particularly limited, but N-methylpyrrolidone (NMP), acetone, water, and the like may be used. If necessary, one or more binders selected from the group consisting of carboxymethyl cellulose (CMC), polyvinylpyridine (PVP), and polyacrylic acid (PAA)-based binders may be added to control a viscosity of the first slurry. In addition, an amount of the binder may be 5 wt% or less based on the total weight of the first slurry.

The negative electrode current collector to which the first slurry is applied is not particularly limited as long as it has conductivity without causing a chemical change in a corresponding battery. For example, copper, stainless steel, aluminum, nickel, titanium, sintered carbon, copper or stainless steel that is surface-treated with carbon, nickel, titanium, silver, and the like, an aluminum-cadmium alloy, and the like may be used. In addition, as in the case of a positive electrode current collector, the bonding strength of a negative electrode active material may be increased by forming microscopic irregularities on a surface thereof. The negative electrode current collector may be used in various forms such as a film, a sheet, a foil, a net, a porous body, a foam body, a non-woven fabric body, and the like.

Subsequently, an operation of applying a second slurry including a negative electrode active material and a polyacrylic acid-based binder onto the first slurry may be performed, and the second slurry may form a negative electrode mixture layer.

The negative electrode active material may be a silicon-based negative electrode active material. Although not particularly limited, the silicon-based negative electrode active material may use at least one selected from the group consisting of a $SiO_x$ ($0 \leq x < 2$) particle, a Si-C composite, and a Si-Y alloy (where Y is an element selected from the group consisting of an alkali metal, an alkaline earth metal, a transition metal, a group 13 element, a group 14 element, and a combination thereof), for example, may be SiO.

In the present disclosure, the binder included in the second slurry may be a polyacrylic acid-based binder. More specifically, the binder may include an acrylic acid-derived structural unit, and at least one selected from the group consisting of a vinyl alcohol-derived structural unit, an acrylamide-derived structural unit, an acrylate-derived structural unit, and a vinyl acetate-derived structural unit. In addition, respective structural units present in the polyacrylic acid-based binder may form cross-linking with each other.

An aqueous binder such as polyacrylic acid may have rigid properties unique to a polymer, but may have brittle properties at the same time. An electrode manufactured using polyacrylic acid solely as a binder may be highly likely to have issues such as cracks occurring during bending, deintercalation occurring during notching, a fairness issue in an electrode state, and cracks occurring in a charging and discharging process even after being manufactured as a battery. In the present disclosure, the polyacrylic acid-based binder including the acrylic acid-derived structural unit, and at least one selected from the group consisting of the vinyl alcohol-derived structural unit, the acrylamide-derived structural unit, the acrylate-derived structural unit, and the vinyl acetate-derived structural unit may be used, thereby remedying the above-described disadvantages of the aqueous binder while suppressing the expansion of the silicon-based negative electrode active material, and specifically, a polyacrylic acid-polyvinyl alcohol copolymer including the acrylic acid-derived structural unit and the vinyl alcohol-derived structural unit may be used.

The polyacrylic acid-based binder may include 40 to 90 mol% of the acrylic acid-derived structural unit, and may include 40 to 80 mol% of the acrylic acid-derived structural unit, based on the total number of moles of the polyacrylic acid-based binder. When an amount of the acrylic acid-derived structural unit is less than 40 mol%, the effect of suppressing the expansion of the silicon-based negative electrode active material may be insignificant, whereas when the amount of the acrylic acid-derived structural unit is greater than 90 mol%, the effect of improving cracks in an electrode layer may not be sufficient.

An amount of the butadiene-derived structural unit present in the styrene butadiene rubber may be determined in consideration of the amount of the acrylic acid-derived structural unit present in the polyacrylic acid-based binder of the second slurry. As the amount of the acrylic acid-derived structural unit increases, the strength of suppressing expansion may increase, but the adhesive strength may decrease, and the possibility of occurrence of cracks may increase. Accordingly, when the amount of acrylic acid-derived structural unit present in the polyacrylic acid-based binder of the second slurry is high, the first slurry may also use the styrene butadiene rubber having a high amount of butadiene-derived structural unit, thereby providing adhesive strength and flexibility to greatly improve the stability of the electrode. More specifically, the amount of the butadiene-derived structural unit and the amount of the acrylic acid-derived structural unit may satisfy a relational expression of Equation 1 below.

[Equation 1]

$$[\text{Amount of butadiene} - \text{derived structural unit (mol)}]$$

$$\geq \frac{3}{4} \times [\text{Amount of acrylic acid} - \text{derived structural unit (mol)}]$$

In addition, the operation of applying the second slurry may be performed before the first slurry is dried. When the first slurry is dried to form a polymer, the second slurry coated thereon may not be mixed with the first slurry, and an electrode having a boundary between the first slurry layer and the second slurry layer may be produced. The adhesive strength at this boundary may become very low. The styrene butadiene rubber included in the first slurry may have a specific gravity close to 1. When the second slurry is applied before the first slurry is dried, a migration phenomenon may occur in which styrene butadiene rubber particles move in a direction in which water evaporates with the evaporation of water. Due to the migration phenomenon, part of the styrene butadiene rubber particles may move upward and may be naturally mixed with the second slurry to provide high electrode adhesive strength and partially offset the brittleness of the polyacrylic acid-based binder.

If necessary, the second slurry may further include a conductive material. The conductive material is not particularly limited as long as it has conductivity without causing a chemical change in a lithium secondary battery. For example, carbon black such as carbon black, acetylene black, Ketjen black, channel black, furnace black, lamp black, thermal black, or the like, a conductive fiber such as a carbon fiber, a metal fiber, or the like, a metal powder such as aluminum powder, nickel powder, or the like, a conductive whisker such as zinc oxide, potassium titanate, or the like, a conductive metal oxide such as titanium oxide or the like, and a conductive material such as a polyphenylene derivative or the like may be used.

A negative electrode may be manufactured by drying and rolling the negative electrode current collector to which the first slurry and the second slurry are applied. Application and drying of a slurry may be performed by a method generally performed in the art, and is not particularly limited. For example, coating using a slot die may be used for application. In addition, Mayer bar coating, gravure coating, dip coating, spray coating, and the like may be used. Drying may be performed, for example, in a dry atmosphere at room temperature. Rolling may be performed by allowing the negative electrode mixture layer formed on the negative electrode current collector by application and drying to pass through a metal mill roll of calendering equipment.

According to another aspect of the present disclosure, there is provided a negative electrode manufactured by the above-described method. FIG. 1 is a schematic diagram illustrating a negative electrode according to an example embodiment of the present disclosure. According to the present disclosure, there is provided a negative electrode 100 including a negative electrode current collector 10, a primer layer 20 formed on at least one surface of the negative electrode current collector 10, the primer layer 20 including styrene butadiene rubber, and a negative electrode mixture layer 30 including a negative electrode active material and a polyacrylic acid-based binder. The negative electrode active material may include a silicon-based negative electrode active material.

As described above, a first slurry including styrene butadiene rubber may form the primer layer 20, and a second slurry applied on the first slurry may form the negative electrode mixture layer 30. The composition and amount of each layer are described above, and thus an additional description is omitted herein.

A loading amount of the primer layer 20 may be 0.1 to 2 wt% of the total loading amount of the negative electrode 100. When the loading amount is less than 0.1 wt%, it may be difficult to secure electrode flexibility due to an insufficient amount of styrene butadiene rubber. When the loading amount is greater than 2 wt%, an amount of the styrene butadiene may be excessively increased, thereby increasing the resistance of the electrode.

According to another aspect of the present disclosure, there is provided a secondary battery including the negative electrode, a positive electrode, and a separator interposed between the positive electrode and the negative electrode.

The positive electrode may include any positive electrode generally used in the art. For example, the positive electrode may be manufactured by applying a mixture of a positive electrode active material, a conductive material, and a binder onto a positive electrode current collector, and then performing drying thereon. As the positive electrode current collector, stainless steel, aluminum, nickel, titanium, sintered carbon, or aluminum or stainless steel that is surface-treated with carbon, nickel, titanium, silver, and the like may be used. In the case of the current collector, the adhesive strength of the positive electrode active material may be increased by forming microscopic irregularities on a surface thereof, and various forms such as a film, a sheet, a foil, a net, a porous body, a foam body, and a non-woven fabric body may be possible.

The positive electrode active material, a compound capable of reversible intercalation and deintercalation of lithium, may specifically include a lithium transition metal composite oxide including lithium and at least one transition metal consisting of nickel, cobalt, manganese and aluminum, and may preferably include a lithium transition metal composite oxide including lithium and a transition metal including nickel, cobalt and manganese.

The positive electrode mixture layer may further include a binder, and the binder may be a component assisting in binding of an active material and a conductive material, and binding for a current collector. Specifically, the positive electrode binder may include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, and fluororubber, and may preferably include polyvinylidene fluoride.

The positive electrode mixture layer may further include one or more conductive materials selected from the group consisting of graphite, carbon black, metal powder, and a conductive oxide so as to improve conductivity.

As the separator, a typical porous polymer film used as a separator according to related art, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith, or a typical porous non-woven fabric, for example, a non-woven fabric formed of a high melting point glass fiber or a polyethylene terephthalate fiber may be used, but the present disclosure is not limited thereto.

In the secondary battery manufactured according to the present disclosure, expansion and contraction of the silicon-based negative electrode active material during charging and discharging may be alleviated, and electrode flexibility may be improved, thereby significantly improving the lifespan properties of the secondary battery.

A secondary battery module may be configured by using the secondary battery according to the present disclosure as a unit cell, and one or more of the modules may be packaged in a pack case to form a secondary battery pack. The above-described secondary battery module and a secondary battery pack including the secondary battery module may be applied to various devices. Such devices may be applied to transportation devices such as an electric bicycle, an electric vehicle, and a hybrid vehicle, but the present disclosure is not limited thereto, and is applicable to various devices capable of using the secondary battery module and the secondary battery pack including the secondary battery module, which is also within the scope of the present disclosure.

Hereinafter, the present disclosure will be described in more detail through specific examples. The following examples are only examples to assist in understanding of the present disclosure, and the scope of the present disclosure is not limited thereto.

**Examples**

**Manufacturing of Negative Electrode**

**Example 1**

A first slurry was prepared by further adding distilled water to styrene butadiene rubber including 10 mol% of a butadiene-derived structural unit, and diluting the styrene butadiene rubber to 10 wt%.

A second slurry was prepared by adding, to distilled water that is a solvent, a polyacrylic acid-polyvinyl alcohol copolymer including $SiO_x$ and graphite as a negative electrode active material, a carbon nanotube (CNT) as a conductive material, and 40 mol% of an acrylic acid-derived structural unit as a binder, and performing mixing thereon.

A negative electrode was manufactured by applying the first slurry to a thin copper plate having a thickness of 10 um, applying the second slurry onto the first slurry before drying the first slurry, and then performing drying and rolling thereon.

**Example 2**

A negative electrode was manufactured in the same manner as in Example 1, except that styrene-butadiene rubber including 30 mol% of a butadiene-derived structural unit was used.

**Example 3**

A negative electrode was manufactured in the same manner as in Example 1, except that styrene-butadiene rubber including 90 mol% of a butadiene-derived structural unit was used.

**Example 4**

A negative electrode was manufactured in the same manner as in Example 1, except that styrene-butadiene rubber including 30 mol% of a butadiene-derived structural unit was used, and a polyacrylic acid-polyvinyl alcohol copolymer including 80 mol% of an acrylic acid-derived structural unit was used.

### Example 5

A negative electrode was manufactured in the same manner as in Example 1, except that styrene-butadiene rubber including 60 mol% of a butadiene-derived structural unit was used, and a polyacrylic acid-polyvinyl alcohol copolymer including 80 mol% of an acrylic acid-derived structural unit was used.

### Example 6

A negative electrode was manufactured in the same manner as in Example 1, except that styrene-butadiene rubber including 90 mol% of a butadiene-derived structural unit was used, and a polyacrylic acid-polyvinyl alcohol copolymer including 80 mol% of an acrylic acid-derived structural unit was used.

### Example 7

A negative electrode was manufactured in the same manner as in Example 1, except that styrene-butadiene rubber including 5 mol% of a butadiene-derived structural unit was used.

### Example 8

A negative electrode was manufactured in the same manner as in Example 1, except that styrene-butadiene rubber including 98 mol% of a butadiene-derived structural unit was used.

### Example 9

A negative electrode was manufactured in the same manner as in Example 1, except that a polyacrylic acid-polyvinyl alcohol copolymer including 5 mol% of an acrylic acid-derived structural unit was used.

### Example 10

A negative electrode was manufactured in the same manner as in Example 1, except that a polyacrylic acid-polyvinyl alcohol copolymer including 95 mol% of an acrylic acid-derived structural unit was used.

### Comparative Example 1

A negative electrode slurry was prepared by adding, to distilled water that is a solvent, $SiO_x$ as a negative electrode active material, and carboxymethyl cellulose (CMC) and styrene butadiene rubber as a binder.
A negative electrode was manufactured by applying the negative electrode slurry onto a thin copper plate having a thickness of 10 $\mu$m, and then performing drying and rolling thereon.

### Comparative Example 2

A first slurry was prepared by further adding distilled water to styrene butadiene rubber including 90 mol% of a butadiene-derived structural unit, and diluting the styrene butadiene rubber to 10 wt%.
A second slurry was prepared by adding, to distilled water that is a solvent, $SiO_x$ and graphite as a negative electrode active material, a carbon nanotube (CNT) as a conductive material, and carboxymethyl cellulose (CMC) and styrene butadiene rubber as a binder.
A negative electrode was manufactured by applying the first slurry onto a thin copper plate having a thickness of 10 um, applying the second slurry onto the first slurry before drying the first slurry, and then performing drying and rolling thereon.

### Comparative Example 3

A negative electrode slurry was prepared by adding, to distilled water that is a solvent, $SiO_x$ and graphite as a negative electrode active material, a carbon nanotube (CNT) as a conductive material, and a polyacrylic acid-polyvinyl alcohol copolymer including 40 mol% of an acrylic acid-derived structural unit as a binder, and performing mixing thereon.
A negative electrode was manufactured by applying the negative electrode slurry onto a thin copper plate having a thickness of 10 μm, and then performing drying and rolling thereon.

**Comparative Example 4**

A negative electrode slurry was prepared by adding, to distilled water that is a solvent, $SiO_x$ and graphite as a negative electrode active material, a carbon nanotube (CNT) as a conductive material, and a polyacrylic acid-polyvinyl alcohol copolymer including 40 mol% of an acrylic acid-derived structural unit and styrene-butadiene rubber including 90 mol% of a butadiene-derived structural unit as a binder, and performing mixing thereon.
A negative electrode was manufactured by applying the negative electrode slurry onto a thin copper plate having a thickness of 10 μm, and then performing drying and rolling thereon.

**Manufacturing of Secondary Battery**

A positive electrode slurry was prepared by adding, to N-methyl-2-pyrrolidone that is a solvent, 50 wt% of a solid obtained by mixing a ternary active material ($Li(Ni_{0.5}Mn_{0.3}Co_{0.2})O_2$) as a positive electrode active material, carbon black as a conductive material, and polyvinylidene fluoride (PVDF) as a binder at a weight ratio of 90:5:5, and then the positive electrode slurry was applied to a thin aluminum plate having a thickness of 12 um, and drying and rolling was performed thereon to manufacture a positive electrode.
The positive electrodes and the negative electrodes manufactured according to Examples 1 to 10 and Comparative Examples 1 to 4 were laminated together with a porous polyethylene film to manufacture an electrode assembly. Thereafter, the electrode assembly was put into a pouch-type battery case, a non-aqueous electrolyte was injected thereinto, and then the battery case was sealed to manufacture a lithium secondary battery.

**Evaluation Of Negative Electrode Expansion Rate and Capacity Retention Rate**

A negative electrode expansion rate and a capacity retention rate were measured for the secondary battery prepared as described above. The negative electrode expansion rate was measured according to Equation 2 below, and the capacity retention rate was measured according to Equation 3 below. Results thereof are indicated in Table 1 below.

[Equation 2]

Negative electrode expansion rate (%) = [(Negative electrode thickness in a fully charged state after 3 charge/discharge cycles – Initial negative electrode thickness)/(Initial negative electrode thickness)]X 100

[Equation 3]

Capacity retention rate (%) = (Discharge capacity after 300 cycles / Discharge capacity in 1 cycle) X 100

[Table 1]

|  | Amount of acrylic acid-derived structural unit (mol%) | Amount of butadiene-derived structural unit (mol%) | Primer layer | Negative electrode expansion rate (%) | Capacity retention rate (%) |
|---|---|---|---|---|---|
| Comparative Example 1 | - | - | X | 33.2 | 76.5 |

(continued)

|  | Amount of acrylic acid-derived structural unit (mol%) | Amount of butadiene-derived structural unit (mol%) | Primer layer | Negative electrode expansion rate (%) | Capacity retention rate (%) |
|---|---|---|---|---|---|
| Comparative Example 2 | - | 90 | ○ | 33.0 | 77.2 |
| Comparative Example 3 | 40 | - | X | 29.6 | 79.0 |
| Comparative Example 4 | 40 | 90 | X | 30.8 | 84.1 |
| Example 1 | 40 | 10 | ○ | 30.7 | 90.6 |
| Example 2 | 40 | 30 | ○ | 30.5 | 93.4 |
| Example 3 | 40 | 90 | ○ | 30.2 | 93.6 |
| Example 4 | 80 | 30 | ○ | 30.2 | 90.8 |
| Example 5 | 80 | 60 | ○ | 30.1 | 93.5 |
| Example 6 | 80 | 90 | ○ | 29.9 | 93.9 |
| Example 7 | 40 | 5 | ○ | 30.8 | 85.3 |
| Example 8 | 40 | 98 | ○ | 30.0 | 89.2 |
| Example 9 | 5 | 10 | ○ | 32.5 | 78.1 |
| Example 10 | 95 | 10 | ○ | 29.2 | 72.6 |

Referring to Table 1, in Comparative Example 1 in which carboxymethyl cellulose (CMC) and styrene butadiene rubber were used as a binder without a primer layer including styrene butadiene rubber, both a negative electrode expansion rate and a capacity retention rate were the lowest. In Example 2, it can be confirmed that a cycle lifespan was slightly improved due to the effect of alleviating migration of styrene-butadiene rubber and improving resistance by a primer layer containing styrene butadiene rubber, but both the negative electrode expansion rate and the capacity retention rate were inferior.

In Comparative Example 3 in which a polyacrylic acid-based binder was used without a primer layer containing styrene butadiene rubber, it can be confirmed that an electrode expansion rate was improved, but the effect of improving lifespan properties was not significant due to cracks occurring due to insufficient flexibility of an electrode.

In Comparative Example 4 in which a polyacrylic acid-based binder and styrene butadiene rubber are included in a single layer structure, it can be confirmed that flexibility was partially improved, but the effect of improving lifespan properties was not significant. Due to the swelling properties of the styrene butadiene rubber itself, Comparative Example 4 shows a slightly increased electrode expansion rate as compared to that in Comparative Example 3.

Examples 1 to 10 show a negative electrode according to the present disclosure. Comparing Examples 1 to 6 with Examples 7 to 10, electrode performance according to an amount of an acrylic acid-derived structural unit and an amount of a butadiene-derived structural unit may be confirmed. When the amount of the acrylic acid-derived structural unit satisfies 40 to 90 mol% and the amount of the butadiene-derived structural unit satisfies 40 to 90 mol%, a negative electrode expansion rate of a negative electrode active material was greatly improved, and a capacity retention rate of a battery may be also very high.

Comparing Examples 1 to 3 with Examples 4 to 6, when the amount of the acrylic acid-derived structural unit is increased, the amount of the butadiene-derived structural unit may be preferably increased. In particular, when the amount of the acrylic acid-derived structural unit and the amount of the butadiene-derived structural unit satisfy a relationship of Equation 1, it can be confirmed that a negative electrode expansion rate and a capacity retention rate were further improved.

[Equation 1]

$$[\text{Amount of butadiene} - \text{derived structural unit (mol)}]$$
$$\geq \frac{3}{4} \text{ X } [\text{Amount of acrylic acid} - \text{derived structural unit (mol)}]$$

While example embodiments have been shown and described above, it will be apparent to those skilled in the art that modifications and variations could be made without departing from the scope of the present disclosure as defined by the appended claims.

**Claims**

1.    A method of manufacturing a negative electrode, the method comprising:

applying a first slurry including styrene butadiene rubber onto at least one surface of a negative electrode current collector;
applying a second slurry including a negative electrode active material and a polyacrylic acid-based binder onto the first slurry; and
drying and rolling the negative electrode current collector to which the first slurry and the second slurry are applied, wherein the negative electrode active material includes a silicon-based negative electrode active material.

2.    The method of claim 1, wherein the polyacrylic acid-based binder includes 40 to 90 mol% of an acrylic acid-derived structural unit, based on the total number of moles of the binder.

3.    The method of claim 1 or 2, wherein the styrene butadiene rubber includes 10 to 95 mol% of a butadiene-derived structural unit, based on the total number of moles of the styrene butadiene rubber.

4.    The method of any one claim of claims 1 to 3, wherein the polyacrylic acid-based binder includes an acrylic acid-derived structural unit; and at least one selected from the group consisting of a vinyl alcohol-derived structural unit, an acrylamide-derived structural unit, an acrylate-derived structural unit, and a vinyl acetate-derived structural unit.

5.    The method of any one claim of claims 1 to 4, wherein an amount of a butadiene-derived structural unit present in the styrene butadiene rubber and an amount of an acrylic acid-derived structural unit present in the polyacrylic acid-based binder satisfy a relational expression of Equation 1 below.

[Equation 1]

$$[\text{Amount of butadiene} - \text{derived structural unit (mol)}]$$
$$\geq \frac{3}{4} \text{ X } [\text{Amount of acrylic acid} - \text{derived structural unit (mol)}]$$

6.    The method of any one claim of claims 1 to 5, wherein the applying of the second slurry is performed before the first slurry is dried.

7.    A negative electrode comprising:

a negative electrode current collector;
a primer layer formed on at least one surface of the negative electrode current collector, the primer layer including styrene butadiene rubber;
a negative electrode mixture layer formed on the primer layer, the negative electrode mixture layer including a negative electrode active material and a polyacrylic acid-based binder,
wherein the negative electrode active material includes a silicon-based negative electrode active material.

8.    The negative electrode of claim 7, wherein the polyacrylic acid-based binder includes 40 to 90 mol% of an acrylic acid-derived structural unit, based on the total number of moles of the binder.

9. The negative electrode of claim 7 or 8, wherein the styrene butadiene rubber includes 10 to 95 mol% of a butadiene-derived structural unit, based on the total number of moles of the styrene butadiene rubber.

10. The negative electrode of any one claim of claims 7 to 9, wherein the polyacrylic acid-based binder includes an acrylic acid-derived structural unit; and at least one selected from the group consisting of a vinyl alcohol-derived structural unit, an acrylamide-derived structural unit, an acrylate-derived structural unit, and a vinyl acetate-derived structural unit.

11. The negative electrode of any one claim of claims 7 to 10, wherein an amount of a butadiene-derived structural unit present in the styrene butadiene rubber and an amount of an acrylic acid-derived structural unit present in the polyacrylic acid-based binder satisfy a relational expression of Equation 1 below.

[Equation 1]

$$[\text{Amount of butadiene} - \text{derived structural unit (mol)}]$$
$$\geq \frac{3}{4} \times [\text{Amount of acrylic acid} - \text{derived structural unit (mol)}]$$

12. The negative electrode of any one claim of claims 7 to 11, wherein a loading amount of the primer layer is 0.1 to 2 wt% of the total loading of the negative electrode.

13. A secondary battery comprising:

   a positive electrode;
   the negative electrode of any one claim of claims 7 to 12; and
   a separator interposed between the positive electrode and the negative electrode.

14. The negative electrode of claim 13, wherein the polyacrylic acid-based binder includes 40 to 90 mol% of an acrylic acid-derived structural unit, based on the total number of moles of the binder.

100

FIG. 1

Europäisches
Patentamt
European
Patent Office
Office européen
des brevets

# EUROPEAN SEARCH REPORT

**Application Number**

EP 23 15 2267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 187 631 A1 (SK ON CO LTD [KR]) 31 May 2023 (2023-05-31) * paragraph [0010] - paragraph [0011] * * paragraph [0029] - paragraph [0032] * * paragraph [0102] - paragraph [0103] * ----- | 1,7,13 | INV. H01M4/04 H01M4/134 H01M4/1395 H01M4/62 H01M4/36 |
| X | KR 2019 0134021 A (SAMSUNG SDI CO LTD [KR]) 4 December 2019 (2019-12-04) * paragraphs [0007], [0023] * * paragraphs [0037], [0040] * * paragraph [0087] * * paragraph [0085] - paragraph [0086] * ----- | 1-14 | H01M4/38 H01M10/052 H01M4/02 |
| A | US 2022/013784 A1 (KIM YOUNG JAE [KR] ET AL) 13 January 2022 (2022-01-13) * paragraph [0005] - paragraph [0006] * * paragraph [0009] * * paragraph [0014] * * paragraph [0047] * * paragraph [0115]; table 2 * ----- | 1-14 | |
| A | KR 2021 0157763 A (LG ENERGY SOLUTION LTD [KR]) 29 December 2021 (2021-12-29) * paragraph [0028] - paragraph [0030] * * paragraph [0048] * * paragraph [0061] * ----- | 1-14 | **TECHNICAL FIELDS SEARCHED (IPC)** H01M |
| A | US 2021/119196 A1 (LI JING [CN] ET AL) 22 April 2021 (2021-04-22) * paragraphs [0009], [0058], [0016], [0146] * ----- | 1-14 | |
| A | US 2018/040880 A1 (ANDERSEN HANNE FLATEN [NO] ET AL) 8 February 2018 (2018-02-08) * paragraphs [0014], [0006], [0018], [0090] * ----- | 1-14 | |

The present search report has been drawn up for all claims

| Place of search | Date of completion of the search | Examiner |
|---|---|---|
| Munich | 4 July 2023 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 2267

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2023

| Patent document cited in search report | | Publication date | Patent family member(s) | | Publication date |
|---|---|---|---|---|---|
| EP 4187631 | A1 | 31-05-2023 | CN | 116169243 A | 26-05-2023 |
| | | | EP | 4187631 A1 | 31-05-2023 |
| | | | KR | 20230077767 A | 02-06-2023 |
| | | | US | 2023163283 A1 | 25-05-2023 |
| KR 20190134021 | A | 04-12-2019 | NONE | | |
| US 2022013784 | A1 | 13-01-2022 | CN | 113632260 A | 09-11-2021 |
| | | | EP | 3863084 A1 | 11-08-2021 |
| | | | KR | 20200109141 A | 22-09-2020 |
| | | | US | 2022013784 A1 | 13-01-2022 |
| | | | WO | 2020185014 A1 | 17-09-2020 |
| KR 20210157763 | A | 29-12-2021 | NONE | | |
| US 2021119196 | A1 | 22-04-2021 | CN | 110660957 A | 07-01-2020 |
| | | | EP | 3796423 A1 | 24-03-2021 |
| | | | HU | E059349 T2 | 28-11-2022 |
| | | | PL | 3796423 T3 | 26-09-2022 |
| | | | US | 2021119196 A1 | 22-04-2021 |
| | | | WO | 2020134736 A1 | 02-07-2020 |
| US 2018040880 | A1 | 08-02-2018 | CA | 2975396 A1 | 06-04-2017 |
| | | | CN | 107408669 A | 28-11-2017 |
| | | | EP | 3357114 A1 | 08-08-2018 |
| | | | JP | 6757900 B2 | 23-09-2020 |
| | | | JP | 2018514067 A | 31-05-2018 |
| | | | KR | 20170121283 A | 01-11-2017 |
| | | | SG | 11201706381T A | 28-09-2017 |
| | | | US | 2018040880 A1 | 08-02-2018 |
| | | | WO | 2017058024 A1 | 06-04-2017 |

EPO FORM P0459

For more details about this annex : see Official Journal of the European Patent Office, No. 12/82